# EUROPÄISCHE PATENTSCHRIFT

(11) **EP 3 708 988 B1**
(45) Veröffentlichungstag und Bekanntmachung des Hinweises auf die Patenterteilung: **17.07.2024**
(21) Anmeldenummer: 20159786.1
(22) Anmeldetag: 27.02.2020
(51) Int. Cl.: G01L 3/10, G01L 5/22

(54) **DREHMOMENTSENSOR UND ANTRIEBSEINHEIT FÜR EIN FAHRRAD**
TORQUE SENSOR AND DRIVE UNIT FOR A BICYCLE
CAPTEUR DE COUPLE ET UNITÉ D'ENTRAÎNEMENT POUR UNE BICYCLETTE

(30) Priorität: 12.03.2019 DE 102019203322
(43) Veröffentlichungstag der Anmeldung: 16.09.2020
(73) Patentinhaber: Robert Bosch GmbH, 70442 Stuttgart (DE)
(72) Erfinder: Ossmann, Christoph, 72768 Reutlingen (DE); Zegowitz, Michael, 72070 Tuebingen (DE); Schock, Wolfram, 72770 Ohmenhausen (DE); Schatz, Frank, 70806 Kornwestheim (DE); Wedderhoff, Kirsten, 72762 Reutlingen (DE)

(56) Entgegenhaltungen:
- EP-A1- 3 364 163
- DE-A1- 4 337 852
- US-A- 5 052 232
- US-A- 5 705 756
- US-A1- 2012 060 628

## Beschreibung

### Stand der Technik

Die vorliegende Erfindung betrifft eine Antriebseinheit für ein Fahrrad.

Weiterhin betrifft die Erfindung einen Drehmomentsensor zum Erfassen eines an einer magnetisierten Antriebswelle angelegten Drehmoments.

Aus dem Stand der Technik sind verschiedene elektrische und/oder mit Muskelkraft betreibbare Fahrzeuge bekannt. Bei solchen Fahrzeugen ist es oft wünschenswert, ein Torsionsmoment oder ein Drehmoment zu erfassen, welche auf eine Welle wirken. Dabei können üblicherweise Drehmomentsensoren eingesetzt werden, welche den Effekt der Magnetostriktion oder Magnetoelastizität, bzw. das Inverse dieser Effekte ausnutzen. Diese Effekte beruhen darauf, dass magnetische, insbesondere ferromagnetische, Stoffe infolge eines von außen angelegten Magnetfelds deformiert werden. Der Umkehreffekt bewirkt, dass sich die magnetischen Eigenschaften des magnetischen Stoffes ändern, wenn dieser deformiert wird. Wird eine Welle zumindest teilweise aus einem Stoff gebildet, welcher diesen magnetoelastischen Effekt aufweist, kann durch Erfassen der magnetischen Eigenschaften dieses Teils der Welle eine Torsion infolge eines an der Welle angelegten Drehmoments erfasst werden.

Drehmomentsensoren sind im Stand der Technik aus US 5 052 232 A, EP 3 364 163 A1, DE 43 37 852 A1, US 5 705 756 A und US 2012/060628 A1 bekannt.

### Offenbarung der Erfindung

Der erfindungsgemäße Drehmomentsensor nach Anspruch 1 weist den Vorteil einer präzisen Erfassung eines auf einer Antriebswelle wirkenden Drehmoments auf, wobei störhafte Einflüsse durch mechanische Störspannungen und störhafte Fernfelder bei der Erfassung verringert beziehungsweise kompensiert werden können.

Dafür werden bei dem erfindungsgemäßen Drehmomentsensor Magnetfeldsensoren, welche Änderungen der magnetischen Eigenschaften der magnetisierten Antriebswelle durch Erfassen eines magnetischen Flusses oder einer magnetischen Flussdichte erfassen, zwischen ferromagnetische Ringkörper angeordnet. Dabei sind die ferromagnetischen Ringkörper voneinander beabstandet angeordnet und umschließen die magnetisierte Antriebswelle. Magnetfelder, welche zwischen den ferromagnetischen Ringkörpern in der Antriebswelle auftreten, werden durch die ferromagnetischen Ringkörper verstärkt und an die Magnetfeldsensoren weitergeleitet. Dadurch, dass die Magnetfeldsensoren zwischen den ferromagnetischen Ringkörpern angeordnet sind, werden störhafte Änderungen bzw. Schwankungen im magnetischen Fluss über den gesamten Umfang der ferromagnetischen Ringkörper gemittelt und kompensiert, bevor sie von den ferromagnetischen Ringkörpern an die Magnetfeldsensoren weitergeleitet werden. Somit werden insbesondere solche mechanischen Störspannungen, welche über den Umfang der ferromagnetischen Ringkörper als Mittelwert den Wert Null haben, durch die ferromagnetischen Ringkörper kompensiert. Die ferromagnetischen Ringkörper haben außerdem den zusätzlichen Vorteil, dass sie den Magnetfluss, welcher durch die Torsion der magnetisierten Welle infolge eines Drehmoments verursacht wird, verstärken und konzentrieren und somit ermöglichen, dass ein kostengünstigerer beziehungsweise wenig empfindlicher Magnetfeldsensor verbaut werden kann.

Die Unteransprüche zeigen bevorzugte Weiterbildungen der Erfindung.

Besonders vorteilhaft ist es, wenn Mittelpunkte der ferromagnetischen Ringkörper auf einer gemeinsamen Mittelpunktsachse liegen. Dabei können die ferromagnetischen Ringkörper parallel zueinander angeordnet werden, wobei radiale Richtungen der ferromagnetischen Ringkörper senkrecht zur Mittelpunktsachse orientiert sind. Dadurch können die Magnetfeldsensoren an einer beliebigen Stelle des Umfangs der ferromagnetischen Ringkörper angeordnet werden und die ferromagnetischen Ringkörper können über ihren gesamten Umfang mechanische Störspannungen kompensieren. Weiter können die ferromagnetischen Ringkörper gewinkelt zueinander angeordnet werden, wobei die radialen Richtungen der ferromagnetischen Ringkörper einen von 90° abweichenden Winkel mit der Mittelpunktsachse bilden. Dadurch kann der Magnetfluss an bestimmten Bereichen der Antriebswelle gezielt gewichtet werden.

Gemäß der beanspruchten Erfindung weisen die ferromagnetischen Ringkörper einen ferromagnetischen Ringabschnitt und mindestens einen ferromagnetischen Brückenabschnitt auf, wobei sich der ferromagnetische Brückenabschnitt in einer axialen Richtung des ferromagnetischen Ringabschnitts erstreckt. Jeder ferromagnetische Brückenabschnitt befindet sich an einem lokal begrenzten Bereich des Umfangs des ferromagnetischen Ringabschnitts. Bei dieser Ausgestaltung wird der Magnetfeldsensor zwischen den ferromagnetischen Brückenabschnitten angeordnet, welche sich an denselben Stellen einer Umfangsrichtung der ferromagnetischen Ringabschnitte gegenüberliegen. Dadurch können die Lage der ferromagnetischen Ringkörper sowie die Dimensionen der Magnetfeldsensoren freier gewählt werden, da die ferromagnetischen Brückenabschnitte, welche sich jeweils zwischen den ferromagnetischen Ringkörpern und den Magnetfeldsensoren erstrecken, an die Abstände der ferromagnetischen Ringkörper zueinander und an die Dimensionen der Magnetfeldsensoren anpassbar sind. Die ferromagnetischen Brückenabschnitte können weiter vorteilhaft eine Breite aufweisen, die schmäler als eine Ringbreite der ferromagnetischen Ringabschnitte ist. Dadurch wird die Magnetflussdichte zwischen den ferromagnetischen Brückenabschnitten und damit die Magnetflussdichte, welche der Magnetfeldsensor erfasst, erhöht beziehungsweise verstärkt.

Gemäß der beanspruchten Erfindung sind mindestens zwei Paare von ferromagnetischen Ringkörpern angeordnet, wobei jedes Paar von ferromagnetischen Ringkörpern einen ersten ferromagnetischen Ringkörper und einen zweiten ferromagnetischen Ringkörper aufweist. Dabei ist in jedem Paar der Durchmesser des ersten ferromagnetischen Ringkörpers größer als der Durchmesser des zweiten ferromagnetischen Ringkörpers. Der erste und der zweite ferromagnetische Ringkörper haben denselben Mittelpunkt. Weiter bevorzugt werden dabei die Magnetfeldsensoren zwischen zwei ersten ferromagnetischen Ringkörpern und/oder zwischen zwei zweiten ferromagnetischen Ringkörpern angeordnet. Durch diese Ausgestaltung ist der erste ferromagnetische Ringkörper weniger empfindlich für das Magnetfeld der Antriebswelle, aber genauso empfindlich wie der zweite ferromagnetische Ringkörper für Fernfelder bzw. externen Störfelder. Das hat zur Folge, dass mittels einer Differenzbildung der Erfassungsergebnisse zwischen den Magnetfeldsensoren, welche jeweils zwischen den ersten und zweiten ferromagnetischen Ringkörpern angeordnet sind, die störhaften Fernfelder zumindest teilweise kompensiert werden können.

Gemäß der beanspruchten Erfindung weist jedes Paar der ferromagnetischen Ringkörper einen ersten ferromagnetischen Ringkörper und einen zweiten ferromagnetischen Ringkörper auf, wobei jeder ferromagnetische Ringkörper einen ferromagnetischen Ringabschnitt und mindestens einen ferromagnetischen Brückenabschnitt aufweist. Somit weist jedes Paar von ferromagnetischen Ringkörpern einen ersten ferromagnetischen Ringabschnitt und einen zweiten ferromagnetischen Ringabschnitt auf. Dabei ist in jedem Paar der ferromagnetischen Ringkörper der Durchmesser des ersten ferromagnetischen Ringabschnitts größer als der Durchmesser des zweiten ferromagnetischen Ringabschnitts. Der erste ferromagnetische Ringabschnitt und der zweite ferromagnetische Ringabschnitt weisen denselben Mittelpunkt auf. Hierbei werden die Magnetfeldsensoren zwischen den ferromagnetischen Brückenabschnitten angeordnet, welche sich an denselben Stellen einer Umfangsrichtung jeweils der ersten und/oder der zweiten ferromagnetischen Ringabschnitte gegenüberliegen. Dadurch ergibt sich auch hierbei der Vorteil, dass störhafte Fernfelder durch die verschiedenen Durchmesser der ersten und zweiten ferromagnetischen Ringkörper kompensiert werden können.

Besonders vorteilhaft ist es, wenn der Drehmomentsensor eine röhrenförmige Hülse aufweist, wobei die ferromagnetischen Ringkörper des Drehmomentsensors radial innerhalb der Hülse angeordnet sind. Bevorzugt ist dabei die röhrenförmige Hülse aus einem ferromagnetischen Stoff gebildet. Dadurch kann die röhrenförmige Hülse äußere magnetische Störeinflüsse wie etwa störhafte Fernfelder abschirmen.

Die Erfindung betrifft außerdem eine Antriebseinheit für ein Fahrrad, welche eine Antriebswelle und einen Drehmomentsensor nach einem der vorstehend beschriebenen bevorzugten Weiterbildungen aufweist. Dabei ist die Antriebswelle eingerichtet, ein Drehmoment von einem Fahrer des Fahrrads aufzunehmen, und ist zumindest abschnittsweise magnetisiert. Der Drehmomentsensor und die Antriebswelle sind so angeordnet, dass der magnetische Abschnitt der Antriebswelle die ferromagnetischen Ringkörper des Drehmomentsensors durchdringt. Der Magnetfeldsensor des Drehmomentsensors kann somit Änderungen der magnetischen Eigenschaften, insbesondere der magnetischen Flussdichten, der Antriebswelle erfassen. Dadurch, dass diese Änderungen durch Torsion der Antriebswelle verursacht werden, kann der Drehmomentsensor Drehmomente erfassen, welcher auf eine Antriebswelle wirken. Insbesondere kann dabei der Drehmomentsensor auf diese Weise ein von dem Fahrer erzeugtes Drehmoment erfassen.

Besonders vorteilhaft ist es, wenn die Antriebswelle mehrere Abschnitte in axialer Richtung aufweist, die unterschiedlich magnetisiert sind. Weiter bevorzugt ist es, die unterschiedlich magnetisierten Abschnitte der Antriebswelle paarweise entgegengesetzt zu magnetisieren. An jedem der unterschiedlich magnetisierten Abschnitte wird mindestens ein Drehmomentsensor wie vorstehend beschrieben angeordnet. Durch Bilden einer Differenz zwischen Erfassungsergebnissen der Drehmomentsensoren an den unterschiedlich magnetisierten Abschnitten können störhafte Fernfelder und mechanische Störspannungen kompensiert werden.

Besonders vorteilhaft ist es, wenn die ferromagnetischen Ringkörper des Drehmomentsensors die Antriebswelle zentrisch umschließen, sodass die Mittelpunktsachse der ferromagnetischen Ringkörper und eine Rotationsachse der Antriebswelle übereinstimmen. Dadurch können störhafte Fernfelder und mechanische Störspannungen über den gesamten Umfang der ferromagnetischen Ringkörper gemittelt und dadurch zumindest teilweise, insbesondere vollständig kompensiert, werden.

Alternativ ist vorteilhafterweise vorgesehen, dass die ferromagnetischen Ringkörper die Antriebswelle exzentrisch umschließen. Dadurch verläuft die Mittelpunktsachse der ferromagnetischen Ringkörper parallel zur Rotationsachse der Antriebswelle und ist von dieser beabstandet. Eine derartige Anordnung hat den Vorteil, dass der radiale Abstand der ferromagnetischen Ringkörper zu der Antriebswelle an verschiedenen Bereichen in Umfangsrichtung der Antriebswelle verschieden ist, wodurch die verschiedenen Bereiche in Umfangsrichtung der Antriebswelle gezielt bei der Erfassung der Magnetflussdichten durch die Magnetfeldsensoren des Drehmomentsensors unterschiedlich gewichtet werden können.

Besonders vorteilhaft ist es wenn die Antriebseinheit weiter einen Antrieb, eine Steuereinheit und ein Abtriebselement aufweist. Dabei ist die Steuereinheit eingerichtet, den Antrieb anhand des von den Drehmomentsensor erfassten Drehmoments anzusteuern. Das Abtriebselement gibt das Drehmoment der Antriebswelle und ein Drehmoment des Antriebs zum Antreiben des Fahrrads aus. Dadurch kann das von dem Antrieb ausgegebene Drehmoment an das von dem Fahrer erzeugte Drehmoment angepasst werden.

Bevorzugt ist in der Antriebseinheit eines elektrisch und/oder mit Muskelkraft betreibbares Fahrrads ein elektrischer Motor als Antrieb vorgesehen. Das Abtriebselement bei einer solchen Anordnung ist vorzugsweise ein Ritzel, welches die Drehmomente, die von dem Fahrer des Fahrrads und von dem elektrischen Motor erzeugt werden, an einen Kettentrieb des Fahrrads ausgibt. Durch die Verwendung des Drehmomentsensors gemäß der Erfindung in einer solchen Anordnung können die Herstellungskosten eines solchen Fahrrads gesenkt werden. Dadurch, dass der Drehmomentsensor störhafte Einflüsse wie etwa mechanische Störspannungen oder externe Störfelder minimieren kann, kann der elektrische Motor zuverlässiger und energiesparender eingesetzt werden, um das von dem Fahrer erzeugte Drehmoment geeignet zu unterstützen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine erste schematische Seitenansicht einer Antriebswelle und eines Drehmomentsensors gemäß einem ersten Beispiel der vorliegendem Erfindung, welches nicht in den Schutzbereich der beanspruchten Erfindung fällt;
- Figur 2a: eine zweite schematische Seitenansicht der Antriebswelle und des Drehmomentsensors gemäß dem ersten Beispiel der vorliegenden Erfindung;
- Figur 2b: eine dritte schematische Seitenansicht der Antriebswelle und des Drehmomentsensors gemäß dem ersten Beispiel der vorliegenden Erfindung;
- Figur 3: eine schematische Seitenansicht der Antriebswelle und eines Drehmomentsensors gemäß einem zweiten Beispiel der vorliegendem Erfindung, welches nicht in den Schutzbereich der beanspruchten Erfindung fällt;
- Figur 4: eine schematische Seitenansicht der Antriebswelle und eines Drehmomentsensors gemäß einem dritten Beispiel der vorliegendem Erfindung, welches nicht in den Schutzbereich der beanspruchten Erfindung fällt;
- Figur 5: eine schematische Seitenansicht der Antriebswelle und des Drehmomentsensors gemäß einem vierten Beispiels der vorliegendem Erfindung, welches nicht in den Schutzbereich der beanspruchten Erfindung fällt;
- Figur 6: eine schematische Seitenansicht der Antriebswelle und eines Drehmomentsensors gemäß einem Ausführungsbeispiel der beanspruchten Erfindung;
- Figur 7: eine schematische Seitenansicht der Antriebswelle und eines Drehmomentsensors gemäß einem fünften Beispiel der vorliegendem Erfindung, welches nicht in den Schutzbereich der beanspruchten Erfindung fällt;

- Figur 8: eine schematische Funktionsskizze einer Antriebseinheit mit dem Drehmomentsensor nach dem Ausführungsbeispiel und
- Figur 9: eine schematische Querschnittsansicht, welche eine alternative Anordnung des Drehmomentsensors nach dem Ausführungsbeispiel in der Antriebseinheit darstellt. Beispiele und Ausführungsformen der Erfindung

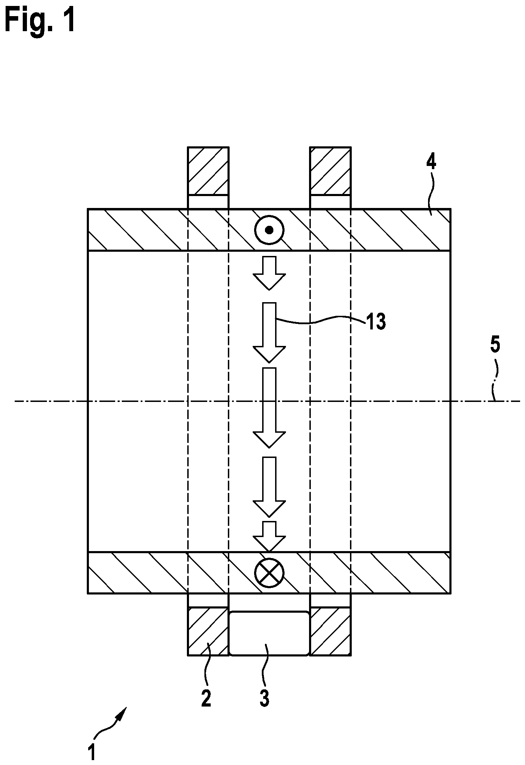

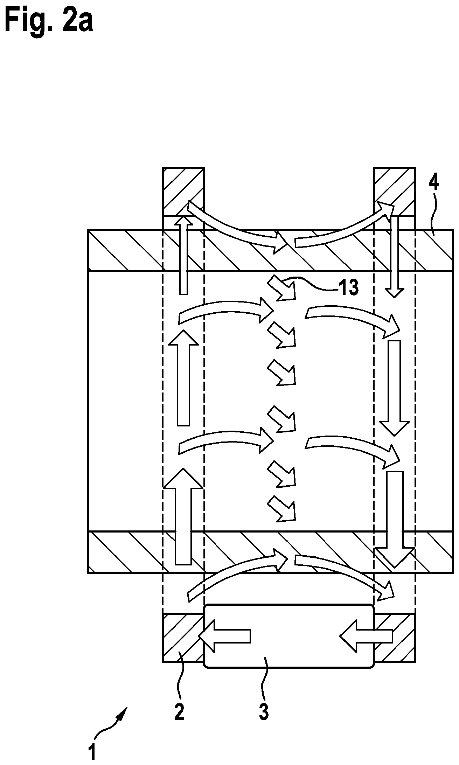

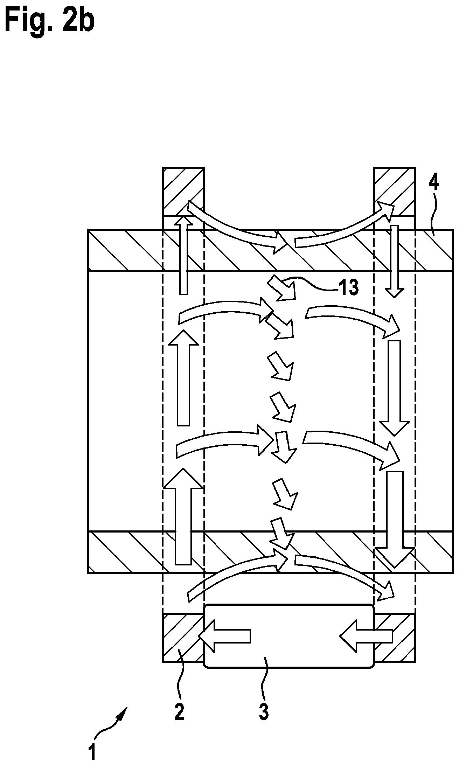

Die Figur 1 zeigt eine Antriebswelle 4 und einen Drehmomentsensor 1 gemäß einem erstes Beispiel der vorliegenden Erfindung. Der Drehmomentsensor 1 dieses Ausführungsbeispiels umfasst zwei ferromagnetische Ringkörper 2, welche hierbei als ferromagnetische Ringe ausgebildet sind, und einen Magnetfeldsensor 3, wobei die Mittelpunkte der ferromagnetischen Ringkörper 2 auf einer gemeinsamen Mittelpunktsachse 5 liegen. Hierbei ist der Drehmomentsensor 1 zum Umschließen einer Antriebswelle 4 angeordnet, wobei der axiale Abschnitt der Antriebswelle 4, welcher von den ferromagnetischen Ringkörpern 2 des Drehmomentsensors 1 eingeschlossen wird, bevorzugt aus einem ferromagnetischen Stoff gebildet und in Umfangsrichtung der Antriebswelle 4 magnetisiert ist. Die ferromagnetischen Ringkörper 2 umschließen die Antriebswelle 4 hierbei zentrisch. Der Magnetfeldsensor 3 ist zwischen den beiden ferromagnetischen Ringkörpern 2 an einem Umfang der Antriebswelle 4 angeordnet. In der Figur 1 ist die Magnetisierung der Antriebswelle 4 schematisch durch Pfeile beziehungsweise Magnetfeldlinien 13 dargestellt. Ferner zeigt die Figur 1 einen Zustand der Antriebswelle 4, bei welchem kein Drehmoment anliegt. Dadurch, dass die Antriebswelle 4 in Umfangsrichtung magnetisiert ist und kein Drehmoment anliegt, brechen die Magnetfeldlinien 13 nicht aus der Antriebswelle 4 aus und der Magnetfeldsensor 3 erfasst ein konstantes beziehungsweise kein Magnetfeld. Die Funktionsweise der Erfassung eines angelegten Drehmoments durch den Drehmomentsensor 1 wird nachfolgend anhand der Figuren 2a und 2b beschrieben.

Die Figur 2a ist eine Seitenansicht der Antriebswelle 4 und des Drehmomentsensors 1 des ersten Beispiels wobei ein Zustand der Antriebswelle 4 gezeigt ist, in welchem ein Drehmoment an der Antriebswelle 4 anliegt. Hierbei zeigen die in axialer Richtung der Antriebswelle 4 mittig angeordneten Magnetfeldlinien 13 die Wirkung des angelegten Drehmoments auf die Magnetisierung der Antriebswelle 4. Das angelegte Drehmoment verursacht eine Torsion der Antriebswelle 4. Durch den inversen magnetoelastischen Effekt werden die magnetischen Eigenschaften der Antriebswelle 4 derart verändert, dass der Magnetfeldfluss nicht mehr ausschließlich in Umfangsrichtung der Antriebswelle 4 verläuft und es kommt zu einem Ausbrechen der Magnetfeldlinien 13. Die ferromagnetischen Ringkörper 2 des Drehmomentsensors 1 gemäß dem vorliegenden Ausführungsbeispiel werden von den ausbrechenden Magnetfeldlinien 13 in ihrem gesamten Umfang ebenfalls magnetisiert. Da der Magnetfeldsensor 3 zwischen den ferromagnetischen Ringkörpern 2 angeordnet ist, wird der durch die Torsion der Antriebswelle 4 verursachte Magnetfluss von den ferromagnetischen Ringkörpern 3 an den Magnetfeldsensor 3 weitergeleitet und von diesem erfasst. Dadurch fungieren die ferromagnetischen Ringkörper 2 des Drehmomentsensors 1 als Flusskonzentratoren.

Die Figur 2b zeigt einen Zustand der Antriebswelle 4, in welchem ein Drehmoment und eine mechanische Störspannung an der Antriebswelle 4 anliegen. Wie den in axialer Richtung der Antriebswelle 4 mittig angeordneten Magnetfeldlinien 13 zu entnehmen ist, verursacht die mechanische Störspannung, dass die ausbrechenden Magnetfeldlinien 13 in Umfangsrichtung der Antriebswelle 4 nicht gleich beziehungsweise nicht parallel ausgerichtet sind, da die Torsion in Umfangsrichtung der Antriebswelle 4 nicht symmetrisch ist. Dadurch, dass die ferromagnetischen Ringkörper 2 die Antriebswelle 4 in Umfangsrichtung umschließen, wird der Magnetfluss, welcher sowohl durch das angelegte Drehmoment und als auch durch mechanische Störspannungen verursacht wird, von den ferromagnetischen Ringkörpern 2 über den gesamten Umfang der Antriebswelle 4 aufgenommen und an den Magnetfeldsensor 3 weitergeleitet. Das bewirkt, dass die ausbrechenden Magnetfeldlinien 13 von den ferromagnetischen Ringkörpern 2 über den gesamten Umfang der Antriebswelle 4 gemittelt werden. Mechanische Störspannungen in der Antriebswelle 4 werden dadurch zumindest teilweise kompensiert, wobei insbesondere solche mechanische Störspannung komplett kompensiert werden, welche über den gesamten Umfang der Antriebswelle 4 einen Mittelwert von Null haben, also welche beispielsweise über den Umfang sinusförmig verteilte Magnetflussschwankungen verursachen. Dadurch kann der Drehmomentsensor 1 des vorliegenden Beispiels das an der Antriebswelle 4 angelegte Drehmoment präzise erfassen und gleichzeitig Messfehler durch mechanische Störspannungen reduzieren.

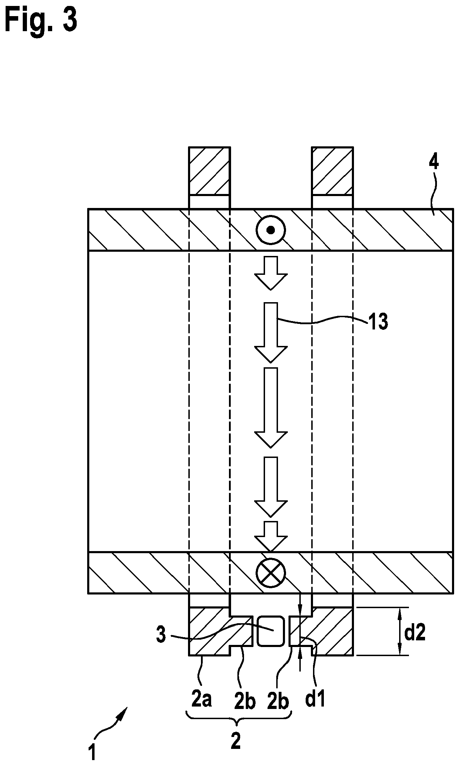

Figur 3 zeigt einen Drehmomentsensor 1 gemäß einem zweiten Beispiel m Unterschied zum ersten Beispiel weisen die ferromagnetischen Ringkörper 2 des Drehmomentsensors 1 des zweiten Beispiel jeweils einen ferromagnetischen Ringabschnitt 2a und einen ferromagnetischen Brückenabschnitt 2b auf. Dabei ist jeweils ein ferromagnetischer Brückenabschnitt 2b in axialer Richtung senkrecht auf einem der ferromagnetischen Ringabschnitte 2a angeordnet. Die ferromagnetischen Ringkörper 2 sind hierbei so angeordnet, dass die ferromagnetischen Brückenabschnitte 2b an denselben Stellen der Umfänge der jeweiligen ferromagnetischen Ringabschnitte 2a sind und sich gegenüberliegen. Das heißt, dass ein ferromagnetischer Brückenabschnitt 2b eines ferromagnetischen Ringkörpers 2 gegenüber von einem weiteren ferromagnetischen Brückenabschnitt 2b eines weiteren ferromagnetischen Ringkörpers 2 angeordnet ist. Bei diesem Beispiel werden die Magnetfeldsensoren 3 zwischen zwei gegenüberliegenden ferromagnetischen Brückenabschnitten 2b angeordnet. Die ferromagnetischen Brückenabschnitte 2b weisen hierbei in radialer Richtung eine Breite d1 auf, welche geringer als eine Ringbreite d2 der ferromagnetischen Ringabschnitte 2a ist. Dadurch steigt die Magnetflussdichte, welche von den ferromagnetischen Brückenabschnitten 2b an die Magnetfeldsensoren 3 weitergeleitet wird, im Vergleich zum ersten Beispiel des Drehmomentsensors 1. Dies ermöglicht, dass ein kostengünstigerer Magnetfeldsensor 3 verbaut werden kann. Außerdem kann bei diesem Beispiel die Größe der ferromagnetischen Brückenabschnitte 2b für eine optimale Anordnung der ferromagnetischen Ringabschnitte 2a angepasst werden, wodurch beispielsweise die Baugröße des Drehmomentsensors 1 des vorliegenden Ausführungsbeispiels optimiert werden kann.

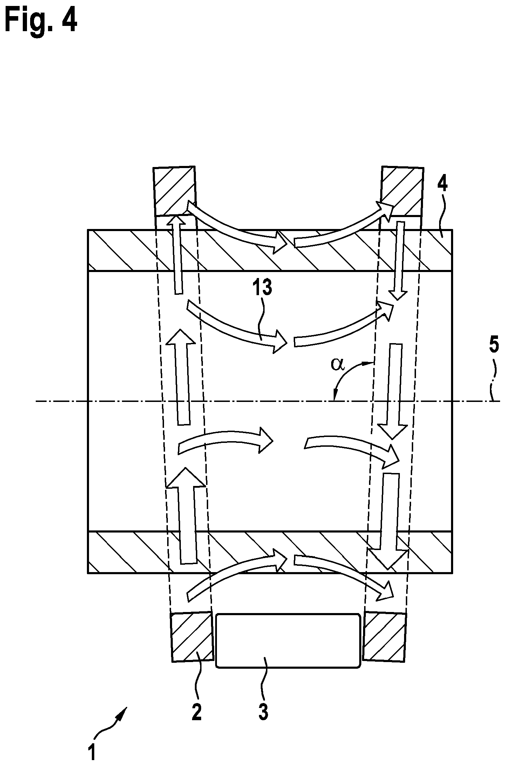

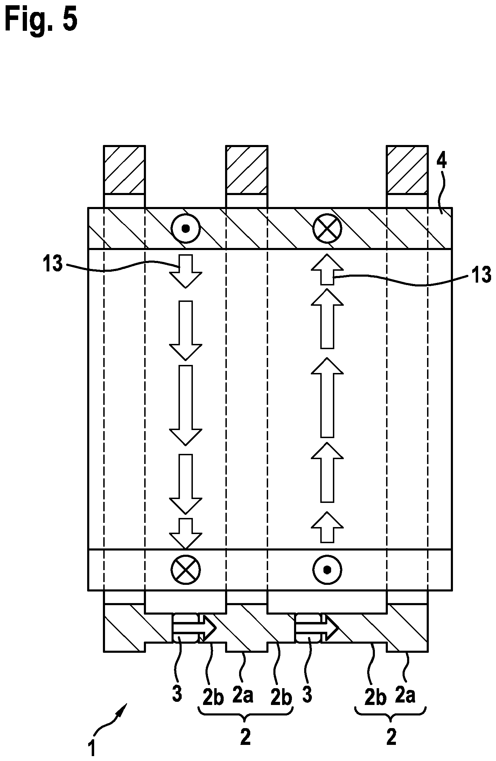

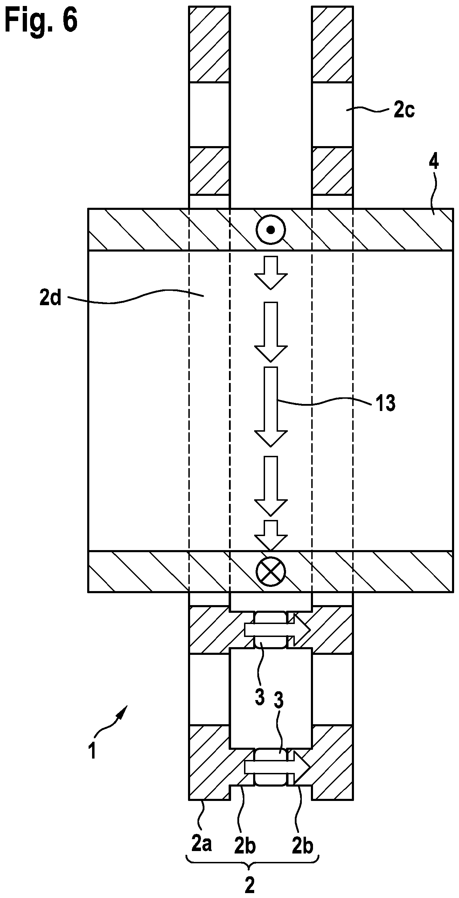

Figur 4 ist eine Seitenansicht der Antriebswelle 4 und eines Drehmomentsensors 1 gemäß einem dritten Beispiel der vorliegenden Erfindung. Im Unterschied zu den Drehmomentsensoren 1 der ersten beiden Beispiele weist der Drehmomentsensor 1 des vorliegenden Beispiels ferromagnetische Ringkörper 2 auf, welche zueinander gewinkelt sind. Dabei nehmen radiale Richtungen der ferromagnetischen Ringkörper 2 mit der vorstehend beschriebenen Mittelpunktsachse 5 einen Winkel α ein, wobei der Winkel α von 90° abweicht. Dieses Beispiel kann auch mit dem zweiten Beispiel kombiniert werden, wobei die ferromagnetischen Ringkörper 2 zueinander gewinkelte ferromagnetische Ringabschnitte 2a und ferromagnetische Brückenabschnitte 2b aufweisen. Durch diese Anordnung können verschiedene Abschnitte in Umfangsrichtung der Antriebswelle 4 bei der Erfassung der Torsion der Antriebswelle 4 gezielt gewichtet werden. Dadurch können beispielsweise Umfangsbereiche der Antriebswelle 4, welche mehr oder stärkeren mechanischen Störspannungen ausgesetzt sind, weniger gewichtet werden, wodurch die Auswirkung der mechanischen Störspannungen auf das erfasste Messergebnis verringert werden kann. Figur 5 zeigt eine Seitenansicht der Antriebswelle 4 und eines Drehmomentsensors 1 gemäß einem vierten Beispiel der vorliegenden Erfindung. Der Drehmomentsensor 1 gemäß diesem Beispiel weist in axialer Richtung der Antriebswelle 4 nebeneinander angeordnete ferromagnetische Ringkörper 2 auf, welche jeweils einen ferromagnetischen Ringabschnitt 2a aufweisen. Bei diesem Beispiel weist der mittlere ferromagnetische Ringkörper 2 zwei ferromagnetische Brückenabschnitte 2b auf, welche an derselben Stelle in Umfangsrichtung auf gegenüberliegenden Seiten eines ferromagnetischen Ringabschnitts 2a angeordnet sind. Die zwei äußeren ferromagnetischen Ringkörper 2 weisen hierbei jeweils einen ferromagnetischen Brückenabschnitt 2b auf. Die Magnetfeldsensoren 3 sind zwischen zwei ferromagnetischen Brückenabschnitten 2b angeordnet, welche sich an denselben Stellen der Umfänge der ferromagnetischen Ringkörper 2a gegenüberliegen. Die Antriebswelle 4 weist in axialer Richtung zwei Abschnitte auf, welche in Umfangsrichtung der Antriebswelle 4 einander entgegengesetzt magnetisiert sind. Jeder dieser zwei Abschnitte wird jeweils von zwei ferromagnetischen Ringkörpern 2 eingeschlossen. Hierbei erfasst jeweils ein Magnetfeldsensor 3 den Magnetfluss zwischen zwei ferromagnetischen Ringkörpern 2. Durch diese Anordnung werden die Magnetfeldlinien 13, welche aus der Antriebswelle 4 ausbrechen, abschnittsweise von zwei ferromagnetischen Ringkörpern 2 verstärkt und gemittelt an einen Magnetfeldsensor 3 weitergeleitet. Externe Störfelder, welche sich unterschiedlich, in diesem Fall entgegengesetzt, auf die unterschiedlich magnetisierten Abschnitte der Antriebswelle 4 auswirken, werden bei einer Differenzbildung der Erfassungsergebnisse der zwei Magnetfeldsensoren 3 herausgerechnet. Somit ermöglicht diese Anordnung, dass sowohl mechanische Störspannungen als auch externe Störfelder gemittelt und kompensiert werden und dass der Magnetfluss, welcher von einem auf die Antriebswelle 4 wirkenden Drehmoment verursacht wird, von den ferromagnetischen Ringkörpern 2 verstärkt und an die Magnetfeldsensoren 3 weitergeleitet wird. Figur 6 zeigt eine schematische Seitenansicht der Antriebswelle 4 und eines

Drehmomentsensors 3 gemäß einem Ausführungsbeispiel der beanspruchten Erfindung. Bei diesem Ausführungsbeispiel sind zwei Paare von ferromagnetischen Ringkörpern 2 angeordnet, wobei jedes Paar einen ersten ferromagnetischen Ringkörper 2c und einen zweiten ferromagnetischen Ringkörper 2d aufweist. Hierbei ist der Durchmesser des ersten ferromagnetischen Ringkörpers 2c größer als der Durchmesser des zweiten ferromagnetischen Ringkörpers 2d, wobei beide ferromagnetische Ringkörper 2c, 2d denselben Mittelpunkt aufweisen. Das heißt, dass in jedem Paar der erste ferromagnetische Ringkörper 2c den zweiten ferromagnetischen Ringkörper 2d umschließt. Jedes der ferromagnetischen Ringkörper 2c, 2d weist einen ferromagnetischen Ringabschnitt 2a und einen ferromagnetischen Brückenabschnitt 2b auf. Die zwei Paare sind so angeordnet, dass sich die ferromagnetischen Brückenabschnitte 2b an denselben Stellen einer Umfangsrichtung der ferromagnetischen Ringabschnitte 2a gegenüberliegen. Dabei ist ein Magnetfeldsensor 3 zwischen den ferromagnetischen Brückenabschnitten 2b der ersten ferromagnetischen Ringkörper 2c und ein weiterer Magnetfeldsensor 3 zwischen den ferromagnetischen Brückenabschnitten 2b der zweiten ferromagnetischen Ringkörper 2d angeordnet. Dadurch, dass die ersten ferromagnetischen Ringkörper 2d einen höheren Abstand zur Antriebswelle 4 aufweisen, sind bei dieser Anordnung die ferromagnetischen Ringkörper 2c weniger empfindlich für das Magnetfeld der Antriebswelle 4, aber genauso empfindlich für externe Störfelder wie die zweiten ferromagnetischen Ringkörper 2d. Somit können, analog zum vierten Ausführungsbeispiel, bei diesem Ausführungsbeispiel Störeinflüsse wie etwa mechanische Störspannungen und externe Störfelder durch eine Differenzbildung der Erfassungsergebnisse der verschiedenen Magnetfeldsensoren 3 herausgerechnet werden. Dabei ist bei diesem Ausführungsbeispiel besonders vorteilhaft, dass die Breite dieses Aufbaus gegenüber dem vierten Ausführungsbeispiel gering ist. Sowohl das vierte als auch das fünfte Ausführungsbeispiel können vorteilhafterweise mit dem ersten und/oder dritten Ausführungsbeispiel kombiniert werden. Das heißt, dass die ferromagnetischen Ringkörper 2 des vierten und des fünften Ausführungsbeispiels als ferromagnetische Ringe 2 wie in dem ersten Ausführungsbeispiel gebildet sein können, und/oder wie in dem dritten Ausführungsbeispiel zueinander gewinkelt angeordnet werden können.

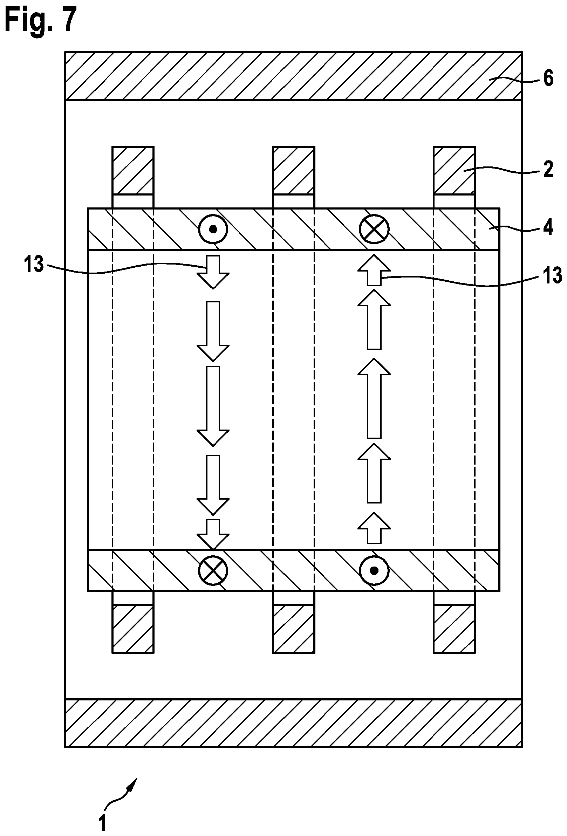

Figur 7 zeigt eine schematische Seitenansicht der Antriebswelle 4 und eines Drehmomentsensors 1 gemäß einem fünften Beispiel der vorliegenden Erfindung. Bei diesem Beispiel umfasst der Drehmomentsensor 1 weiter eine röhrenförmige Hülse 6. Die röhrenförmige Hülse 6 ist hierbei bevorzugt ebenfalls aus einem ferromagnetischen Werkstoff gebildet, um externe Störfelder abzuschirmen. Wie der Fig. 7 zu entnehmen ist, umschließt die röhrenförmige Hülse 6 den Drehmomentsensor 1, wobei die ferromagnetischen Ringkörper 2 radial innerhalb der röhrenförmigen Hülse 6 angeordnet sind.

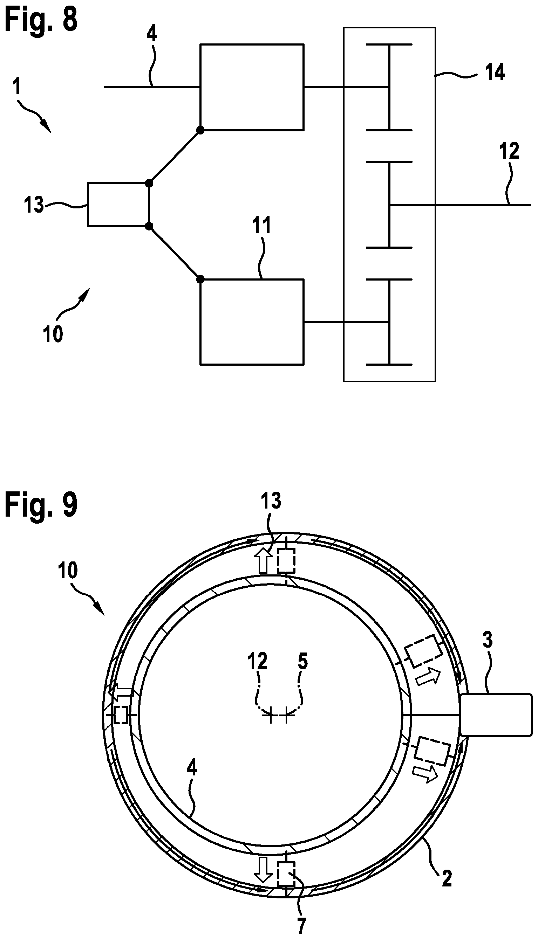

Figur 8 zeigt eine schematische Funktionsskizze einer Antriebseinheit 10 für ein Fahrrad mit dem Drehmomentsensor 1 nach dem Ausführungsbeispiel.

Hierbei weist die Antriebseinheit 10 die Antriebswelle 4, den Drehmomentsensor 1, einen Antrieb 11, ein Abtriebselement 12 und eine Steuereinheit 13 auf. Die Antriebswelle 4 erfährt ein von einem Fahrer des Fahrrads erzeugtes Drehmoment, welches von dem Drehmomentsensor 1 erfasst wird. Das von dem Fahrer des Fahrrads erzeugte Drehmoment wird beispielsweise über einen Kurbeltrieb auf die Antriebswelle 4 aufgebracht. Die Steuereinheit 13, welche mit dem Antrieb 11 und dem Drehmomentsensor 1 verbunden ist, steuert den Antrieb 11 anhand des von dem Drehmomentsensor 1 erfassten Drehmoments. Dabei ist der Antrieb 11 beispielsweise ein elektrischer Motor. Das Abtriebselement 12 ist mit der Antriebswelle 4 und dem Antrieb 11 insbesondere über eine Getriebeeinheit 14 verbunden und gibt ein Drehmoment der Antriebswelle 4 und ein Drehmoment des Antriebs 11 zum Antreiben des Fahrrads aus. Das Abtriebselement 12 ist hierbei beispielsweise ein Ritzel, welches das von der Getriebeeinheit 14 ausgegebene Drehmoment zum Antrieben eines Kettentriebes ausgibt. Durch die Getriebeeinheit 14 erfährt das Kettentrieb des Fahrrads gleichzeitig die von dem Fahrer und von dem elektrischen Motor erzeugte Drehmomente.

Figur 9 zeigt eine schematische Querschnittsansicht, welche eine alternative Anordnung des Drehmomentsensors 1 nach dem Ausführungsbeispiel in der Antriebseinheit 10 darstellt. Hierbei umschließen die ferromagnetischen Ringkörper 2 die Antriebswelle 4, welche eine Rotationsachse 12 hat, exzentrisch. Das heißt, dass die Mittelpunktsachse 5, auf welcher die Mittelpunkte der ferromagnetischen Ringkörper 2 liegen, parallel zur Rotationsachse 12 und von dieser beabstandet ist. Dabei sind magnetische Widerstände 7 an den Stellen, an welchen die ferromagnetischen Ringkörper 2 in radialer Richtung näher zur Antriebswelle 4 sind, geringer als an den Stellen, an welchen die ferromagnetischen Ringkörper 2 in radialer Richtung weiter von der Antriebswelle 4 entfernt sind. Die Magnetfeldlinien 13, welche aus der Antriebswelle 4 ausbrechen, werden auch hierbei über den gesamten Umfang der ferromagnetischen Ringkörper 2 gemittelt und an den Magnetfeldsensor 3 verstärkt weitergeleitet. Durch diese Anordnung können verschiedene Bereiche in Umfangsrichtung der Antriebswelle 4 gezielt verschieden gewichtet werden, wobei das anliegende Drehmoment durch das Mitteln der ferromagnetischen Ringkörper 2 von dem Magnetfeldsensor 3 trotz der exzentrischen Lage der ferromagnetischen Ringkörper 2 richtig erfasst wird.

## Patentansprüche

1. Drehmomentsensor (1) zum Erfassen eines an einer magnetisierten Antriebswelle (4) angelegten Drehmoments, wobei der Drehmomentsensor (1) umfasst:
• mindestens zwei ferromagnetische Ringkörper (2), welche voneinander beabstandet angeordnet und zum Umschließen der magnetisierten Antriebswelle (4) konfiguriert sind, und
• zumindest einen Magnetfeldsensor (3), der zwischen den ferromagnetischen Ringkörpern (2) angeordnet und zum Erfassen einer magnetischen Flussdichte zwischen den ferromagnetischen Ringkörpern (2) ausgebildet ist, wobei
• jeder ferromagnetische Ringkörper (2) jeweils einen ferromagnetischen Ringabschnitt (2a) und mindestens einen sich in einer axialen Richtung des ferromagnetischen Ringkörpers (2) erstreckenden ferromagnetischen Brückenabschnitt (2b) aufweist, und der Magnetfeldsensor (3) zwischen den ferromagnetischen Brückenabschnitten (2b) angeordnet ist, die sich an denselben Stellen einer Umfangsrichtung der ferromagnetischen Ringabschnitte (2a) gegenüberliegen, **dadurch gekennzeichnet, dass**
mindestens zwei Paare von ferromagnetischen Ringkörpern (2) vorgesehen sind, wobei jedes Paar einen ersten ferromagnetischen Ringkörper (2c) und einen zweiten ferromagnetischen Ringkörper (2d) aufweist, der Durchmesser des ersten ferromagnetischen Ringkörpers (2c) größer als der Durchmesser des zweiten ferromagnetischen Ringkörpers (2d) ist und der erste ferromagnetische Ringkörper (2c) und der zweite ferromagnetische Ringkörper (2d) denselben Mittelpunkt aufweisen.

2. Drehmomentsensor (1) nach Anspruch 1, **dadurch gekennzeichnet, dass** Mittelpunkte der ferromagnetischen Ringkörper (2) auf einer gemeinsamen Mittelpunktsachse (5) liegen.

3. Drehmomentsensor (1) nach einem der vorhergehenden Ansprüche, **gekennzeichnet durch** eine röhrenförmige Hülse (6), die insbesondere ferromagnetisch ausgebildet ist, wobei die ferromagnetischen Ringkörper (2) radial innerhalb der Hülse (6) angeordnet sind.

4. Antriebseinheit (10) für ein Fahrrad, **dadurch gekennzeichnet, dass** die Antriebseinheit (10) aufweist:
• eine Antriebswelle (4), welche eingerichtet ist, ein Drehmoment von einem Fahrer des Fahrrads aufzunehmen, und welche zumindest abschnittsweise magnetisiert ist; und
• einen Drehmomentsensor (1) nach einem der vorhergehenden Ansprüche,
• wobei ein magnetisierter Abschnitt der Antriebswelle (4) die ferromagnetischen Ringkörper (2) des Drehmomentsensors (1) durchdringt.

5. Antriebseinheit (10) nach Anspruch 4, **dadurch gekennzeichnet, dass** die Antriebswelle (4) mehrere Abschnitte in axialer Richtung aufweist, die unterschiedlich magnetisiert, insbesondere entgegengesetzt magnetisiert, sind.

6. Antriebseinheit (10) nach Anspruch 4 oder 5, **dadurch gekennzeichnet, dass** die ferromagnetischen Ringkörper (2) die Antriebswelle (4) zentrisch umschließen, sodass die Mittelpunktsachse (5) der ferromagnetischen Ringkörper (2) und eine Rotationsachse (12) der Antriebswelle (4) übereinstimmen.

7. Antriebseinheit (10) nach Anspruch 4 oder 5, **dadurch gekennzeichnet, dass** die ferromagnetischen Ringkörper (2) die Antriebswelle (4) exzentrisch umschließen, sodass die Mittelpunktsachse (5) der ferromagnetischen Ringkörper (2) parallel zur Rotationsachse (12) der Antriebswelle (4) und von dieser beabstandet ist.

8. Antriebseinheit (10) nach einem der Ansprüche 4 bis 7, **dadurch gekennzeichnet, dass** die Antriebseinheit (10) einen Antrieb (11), eine Steuereinheit (13), welche zum Ansteuern des Antriebs (11) anhand des von dem Drehmomentsensor (1) erfassten Drehmoments eingerichtet ist, und ein Abtriebselement (12), welches zum Ausgeben des Drehmoments der Antriebswelle (4) und eines Drehmoments des Antriebs (11) zum Antreiben des Fahrrads ausgebildet ist, aufweist.

## Claims

1. Torque sensor (1) for detecting a torque applied to a magnetized drive shaft (4), wherein the torque sensor (1) comprises:
• at least two ferromagnetic ring bodies (2), which are arranged spaced apart from one another and are configured for surrounding the magnetized drive shaft (4), and
• at least one magnetic field sensor (3), which is arranged between the ferromagnetic ring bodies (2) and is designed for detecting a magnetic flux density between the ferromagnetic ring bodies (2), wherein
• each ferromagnetic ring body (2) in each case has a ferromagnetic ring portion (2a) and at least one ferromagnetic bridge portion (2b) extending in an axial direction of the ferromagnetic ring body (2), and the magnetic field sensor (3) is arranged between the ferromagnetic bridge portions (2b) which lie opposite one another at the same points of a circumferential direction of the ferromagnetic ring portions (2a), **characterized in that**
at least two pairs of ferromagnetic ring bodies (2) are provided, wherein each pair has a first ferromagnetic ring body (2c) and a second ferromagnetic ring body (2d), the diameter of the first ferromagnetic ring body (2c) is larger than the diameter of the second ferromagnetic ring body (2d), and the first ferromagnetic ring body (2c) and the second ferromagnetic ring body (2d) have the same centre point.

2. Torque sensor (1) according to Claim 1, **characterized in that** centre points of the ferromagnetic ring bodies (2) lie on a common centre point axis (5).

3. Torque sensor (1) according to either of the preceding claims, **characterized by** a tubular sleeve (6) which is in particular ferromagnetic, wherein the ferromagnetic ring bodies (2) are arranged radially within the sleeve (6).

4. Drive unit (10) for a bicycle, **characterized in that** the drive unit (10) has:
• a drive shaft (4), which is configured to receive a torque from a rider of the bicycle, and which is magnetized at least in some sections; and
• a torque sensor (1) according to one of the preceding claims,
• wherein a magnetized portion of the drive shaft (4) penetrates the ferromagnetic ring bodies (2) of the torque sensor (1).

5. Drive unit (10) according to Claim 4, **characterized in that** the drive shaft (4) has a plurality of portions in the axial direction that are magnetized differently, in particular oppositely magnetized.

6. Drive unit (10) according to Claim 4 or 5, **characterized in that** the ferromagnetic ring bodies (2) surround the drive shaft (4) centrally such that the centre point axis (5) of the ferromagnetic ring bodies (2) and an axis of rotation (12) of the drive shaft (4) coincide.

7. Drive unit (10) according to Claim 4 or 5, **characterized in that** the ferromagnetic ring bodies (2) surround the drive shaft (4) eccentrically such that the centre point axis (5) of the ferromagnetic ring bodies (2) is parallel to, and spaced apart from, the axis of rotation (12) of the drive shaft (4).

8. Drive unit (10) according to one of Claims 4 to 7, **characterized in that** the drive unit (10) has a drive (11), a control unit (13), which is configured to activate the drive (11) on the basis of the torque detected by the torque sensor (1), and an output element (12), which is designed to output the torque of the drive shaft (4) and a torque of the drive (11) in order to drive the bicycle.

## Revendications

1. Capteur de couple (1) pour détecter un couple appliqué à un arbre d'entraînement aimanté (4), le capteur de couple (1) comprenant :
• au moins deux corps annulaires ferromagnétiques (2), qui sont espacés l'un de l'autre et configurés pour entourer l'arbre d'entraînement aimanté (4), et
• au moins un capteur de champ magnétique (3) qui est agencé entre les corps annulaires ferromagnétiques (2) et qui est conçu pour détecter une densité de flux magnétique entre les corps annulaires ferromagnétiques (2),
• chaque corps annulaire ferromagnétique (2) comprend respectivement une partie annulaire ferromagnétique (2a) et au moins une partie de pont ferromagnétique (2b) s'étendant dans une direction axiale du corps annulaire ferromagnétique (2), et en ce que le capteur de champ magnétique (3) est agencé entre les parties de pont ferromagnétiques (2b) qui sont opposées aux mêmes emplacements dans une direction circonférentielle des parties annulaires ferromagnétiques (2a), **caractérisé en ce que**
au moins deux paires de corps annulaires ferromagnétiques (2) sont prévues, chaque paire comprenant un premier corps annulaire ferromagnétique (2c) et un deuxième corps annulaire ferromagnétique (2d), le diamètre du premier corps annulaire ferromagnétique (2c) étant plus grand que le diamètre du deuxième corps annulaire ferromagnétique (2d), et le premier corps annulaire ferromagnétique (2c) et le deuxième corps annulaire ferromagnétique (2d) présentant le même centre.

2. Capteur de couple (1) selon la revendication 1, **caractérisé en ce que** des centres des corps annulaires ferromagnétiques (2) sont situés sur un axe central commun (5).

3. Capteur de couple (1) selon l'une des revendications précédentes, **caractérisé par** un manchon tubulaire (6), qui est notamment ferromagnétique, les corps annulaires ferromagnétiques (2) étant agencés radialement à l'intérieur du manchon (6).

4. Unité d'entraînement (10) pour une bicyclette, **caractérisée en ce que** l'unité d'entraînement (10) comprend :
• un arbre d'entraînement (4) qui est conçu pour recevoir un couple d'un cycliste de la bicyclette et qui est aimanté au moins par portions ; et
• un capteur de couple (1) selon l'une des revendications précédentes,
• une portion aimantée de l'arbre d'entraînement (4) traversant les corps annulaires ferromagnétiques (2) du capteur de couple (1).

5. Unité d'entraînement (10) selon la revendication 4, **caractérisée en ce que** l'arbre d'entraînement (4) présente plusieurs portions dans la direction axiale qui sont aimantées différemment, en particulier aimantées de manière opposée.

6. Unité d'entraînement (10) selon la revendication 4 ou 5, **caractérisée en ce que** les corps annulaires ferromagnétiques (2) entourent l'arbre d'entraînement (4) de manière centrée, de sorte que l'axe central (5) des corps annulaires ferromagnétiques (2) et un axe de rotation (12) de l'arbre d'entraînement (4) coïncident.

7. Unité d'entraînement (10) selon la revendication 4 ou 5, **caractérisée en ce que** les corps annulaires ferromagnétiques (2) entourent l'arbre d'entraînement (4) de manière excentrique, de sorte que l'axe central (5) des corps annulaires ferromagnétiques (2) est parallèle à l'axe de rotation (12) de l'arbre d'entraînement (4) et est espacé de celui-ci.

8. Unité d'entraînement (10) selon l'une des revendications 4 à 7, **caractérisée en ce que** l'unité d'entraînement (10) comprend un entraînement (11), une unité de commande (13) qui est conçue pour commander l'entraînement (11) au moyen du couple détecté par le capteur de couple (1), et un élément de sortie (12) qui est conçu pour délivrer le couple de l'arbre d'entraînement (4) et un couple de l'entraînement (11) pour entraîner la bicyclette.
